# EUROPEAN PATENT SPECIFICATION

(11) **EP 2 086 719 B1**
(45) Date of publication and mention of the grant of the patent: **29.12.2010**
(21) Application number: 07825288.9
(22) Date of filing: 01.10.2007
(51) Int. Cl.: B23Q 11/10, F16J 15/00

(54) **DEVICE FOR CONVEYING FLUID TO A ROTARY TOOL AND RELATIVE TOOL CARRIER, SPINDLE AND ELECTRIC SPINDLE**
VORRICHTUNG ZUR BEFÖRDERUNG VON FLUID ZU EINEM DREHWERKZEUG UND ZUGEHÖRIGE(R) WERKZEUGTRÄGER, SPINDEL UND ELEKTRISCHE SPINDEL
DISPOSITIF DE CONDUITE DU FLUIDE VERS UN OUTIL ROTATIF ET PORTE-OUTIL CORRESPONDANT, PIVOT ET PIVOT ÉLECTRIQUE

(30) Priority: 03.10.2006 IT VI20060293
(43) Date of publication of application: 12.08.2009
(73) Proprietor: Saccardo, Elettromeccanica, S.r.l., 36014 Santorso (VI) (IT)
(72) Inventor: VIGATO, Fabio, 36030 Valli del Pasubio (Vicenza) (IT)
(74) Representative: Ziliotto, Tiziano
(86) International application number: PCT/IB2007/002967
(87) International publication number: WO 2008/041114

(56) References cited:
- EP-A- 0 629 462
- EP-A- 1 254 741
- DE-A1- 10 135 419
- DE-U1- 20 311 890
- US-A1- 2002 176 758

## Description

The invention concerns the sector of machine tools for processing materials.

In particular, the present invention concerns a device suitable for conveying a coolant and/or lubricant to a rotary tool mounted on a rotary shaft of a machine tool.

In greater detail, the present invention concerns a rotary joint intended to convey fluids to the rotary shafts preferably of machine tools, like for example machines for cutting stone and/or marble and/or metals for the purpose of lubricating and/or cooling the tool.

More particularly, the joint that is the subject of the invention is particularly suited to be used for equipping spindles and electric spindles, pneumatic spindles, hydraulic spindles, etc.

The invention concerns also an electric spindle provided with channels for cooling the tool with a coolant.

As already known, in the machine tools suitable for processing various materials like, for example, marble, granite, glass, metal and the like, a special tool is set rotating around its own axis by means of a suitable mechanical member or shaft that is called spindle.

During some of these processing cycles, the tool must be cooled and/or lubricated by means of a fluid that flows out of a duct obtained in said shaft. This duct is fed by an appropriate device suited to convey the coolant and/or lubricant, also called rotary joint or manifold, positioned at the back of the shaft.

The joints of known type substantially comprise a first fixed part provided with a fluid delivery duct and a second part provided with an outlet duct suited to be placed in communication with the duct present in the rotary shaft.

The second part is rotatingly mounted on said first part and is suited to be anchored to the rear end of the shaft to which the tool is connected. More particularly, the second part is constituted by a hollow shaft that is housed in an appropriate seat created in the fixed part, relative to which, in some embodiments, it may also slide axially.

Various sealing systems are used in the known art to minimize fluid leakages between the fixed part and the rotary component of the device.

These solutions substantially include the use of one or more annular sealing elements, which are interposed between the two parts. More particularly, according to these solutions each element is integral with the fixed part and permanently in contact with the rotary part.

These sealing elements, also called O rings or gaskets, are generally made of rubber. Teflon or another hard material and have such a shape and size that once they have been inserted between the two parts, they adhere permanently to the surface of the rotary part, in such a way as to guarantee a radial and/or axial sealing action.

Water tightness is thus guaranteed thanks to the fact that each sealing element always has an annular and/or axial surface in contact with the fixed part and an annular and/or axial surface always in contact with the rotary part of the joint.

An example of a par art devices can be found in documents EP 1254741 A1 and DE 4226922 A1.

A first drawback of these known solutions is constituted by the fact that, if dry operation of the tool is required, that is, operation without conveying fluid, the frictions generated at the level of the sealing surfaces prevent the use of said devices, unless a consequent and undesired untimely wear of the sealing elements is accepted, together with the consequent and progressive reduction in the efficiency of the same.

Another drawback lies in that, in case of use of a coolant and/or lubricant, for example oil or water, this still results in a considerable wear of these surfaces, also due to the presence of traces of abrasive particles in the fluid.

In both cases, therefore, the sealing surfaces are subjected to stresses that tend to make them deteriorate over time and must successively be replaced.

In other words, some of the drawbacks observed in the known solutions concern the generation of heat during the "dry" operation of the tool and the wear of the components in case of use of a fluid to be channelled that is not sufficiently filtered, with consequent frequent replacements of the sealing elements.

The object of the present invention is to overcome all the drawbacks described.

In particular, it is one object of the present invention to propose a device suitable for conveying a coolant and/or lubricant to a rotary tool usable in machine tools for the processing of various materials, like for example marble, granite, glass, metal and the like, as well as a relative perfected rotary spindle.

It is another object of the invention to carry out a device and a relative spindle or electric spindle that allow "dry" operation, and in particular that during the dry operation of the tool do not generate overheating due to friction between the surfaces that ensure water tightness.

It is a further object of the invention to carry out a device that makes it possible to gradually increase the degree of tightness as a direct function of the fluid delivery pressure.

It is another object of the invention to carry out a device, a spindle, a tool carrier and an electric spindle that compared to the known devices make it possible to increase water tightness during operation with lubricated/cooled tool and that reduce considerably the friction generated by and therefore the wear of the sealing elements during operation with fluid, even when the latter contains traces of abrasive particles or other impurities.

It is a further object of the invention to carry out a device ensuring less reduction in water tightness than the devices of known type, even in the presence of dust particles in the coolant.

It is a further object of the invention to carry out a device and a spindle that can operate also in dry conditions without affecting the water tightness characteristics of the device itself.

It is a further object of the invention to carry out a device that does not cause overheating and worsening of the tightness characteristics when it operates in dry conditions.

It is a further object of the invention to decrease the loss of energy in the form of heat resulting from the dry operation of the device, spindle, tool carrier or electric spindle.

It is a further object of the invention to carry out a device and an electric spindle that need less maintenance than the devices and electric spindles of known type, in particular with reference to the parts intended to ensure water tightness.

It is a further object of the invention to carry out a device and an electric spindle that are more reliable, that is, that are capable of operating for a larger number of hours with no need for maintenance compared to the devices of known type, in the same operating conditions.

It is another object of the invention to carry out a spindle, a tool carrier and an electric spindle that are more reliable than those of known type having comparable characteristics.

It is another, yet not the least object of the invention to carry out a device and an electric spindle that are economic and easy to construct and to assemble.

The objects mentioned above have been achieved through the construction of a device suitable for conveying a fluid to a rotary tool described and characterized according to the main claim.

The objects described above are achieved also by a spindle, an electric spindle and a tool carrier described and characterized in the respective independent claims.

Advantageous embodiments of the invention are the subject of the dependent claims. The proposed solution advantageously makes it possible to carry out a device, a spindle, a tool carrier and an electric spindle in which contact between the sealing surfaces occurs only when necessary and in particular in the presence of pressurized fluid.

In fact, the proposed solution advantageously makes it possible to carry out a device and an electric spindle that in case of dry operation generate no friction, thanks to the advantageous effect of the centrifugal force to which the sealing element is subjected during the rotation of the tool.

In other words, the solution of the invention makes it possible to carry out a device that offers water tightness only when the tool needs lubricating and thus to produce an effective contact of the sealing element with the surfaces of the moving and fixed parts of the device only when water tightness is required, that is, exclusively in case of use of pressurized fluid.

This advantageously makes it possible to carry out a device, a spindle, a tool carrier and an electric spindle that are less subject to wear and therefore are more reliable and long-lasting and require less maintenance.

Still to advantage, the proposed solution makes it possible to carry out a device and a manifold where, in conditions of particularly high pressure, water tightness is complete and therefore fluid leakages are substantially equal to zero.

Still advantageously, the solution proposed makes it possible to reduce considerably losses in the form of heat in conditions of dry operation.

Still advantageously, the solution proposed makes it possible to carry out a simple device comprising a reduced number of components.

The aims and advantages described above will be highlighted in greater detail in the description of some preferred embodiments of the invention, provided indicatively as examples without limitation, with reference to the enclosed drawings, wherein:
- Figure 1a shows a side view of an electric spindle carried out according to the present invention;
- Figure 1b shows a view of a partial longitudinal cross section of the electric spindle shown in Figure 1;

- Figure 2 shows a longitudinal cross section of an example of embodiment of a device carried out according to the invention in a first operating position;
- Figure 3 shows a longitudinal section of the device shown in Figure 2 in a different operating position.

First of all it is important to point out that corresponding components in different examples of embodiments are indicated by the same reference numbers.

The position indications given in the different examples of embodiment should be transferred to the new position.

While the following description, made with reference to the figures, illustrates some particular embodiments of the present invention, it is clear that the invention is not limited to said particular embodiments, rather, the individual embodiments described here below clarify different aspects of the present invention, the scope and purpose of which are defined in the claims.

The examples of embodiment of the invention described here below refer to an electric spindle and to a device suitable for conveying a coolant and/or lubricant to a tool mounted on a rotary shaft of a machine tool, preferably of the CNC type and intended for processing various materials such as stone, marble or metal etc., in which for some types of applications it is necessary to convey said lubricant and/or coolant to the tool.

It is clear that the solution proposed can be applied to any tool carrier or spindle or electric spindle including an operating mode with a lubricant and/or coolant.

More generally, the device that is the subject of the invention is suitable for connecting a static duct of lubricating-cooling fluid to a rotary duct integral with a tool carrier shaft for cooling the tool in machine tools used for removing material in general.

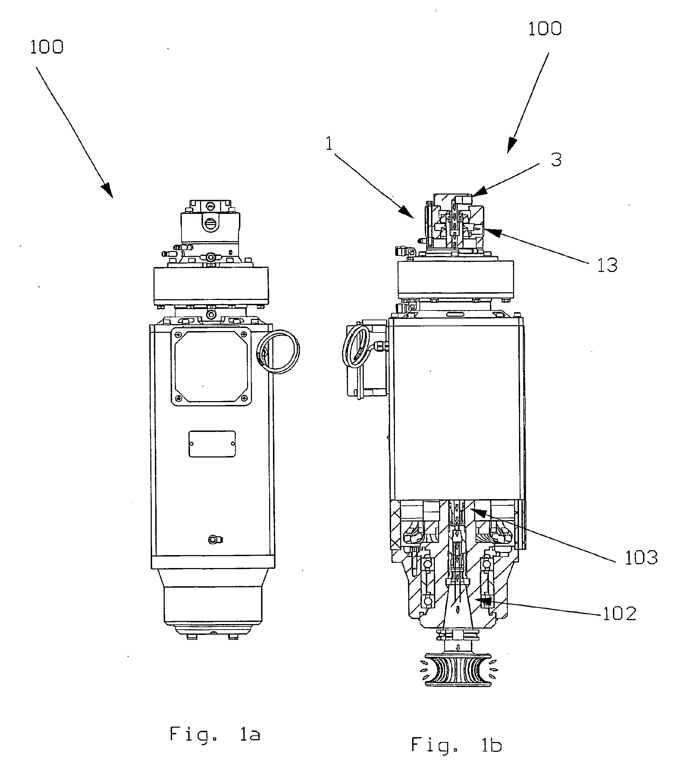

An example of application of the solution that is the subject of the invention is represented in Figures 1a and 1b, illustrating an electric spindle indicated as a whole by 100, which is also the subject of the present invention.

The electric spindle 100 comprises an electric motor, not visible in the figure, positioned inside the frame and generating the rotation of the spindle shaft 102 inside which there is a drilled shaft 103 for the passage of the lubricant and/or coolant.

At the back of the shaft 103 there is a device 1 suited to convey the fluid to the shaft 103 itself that is also the subject of the invention.

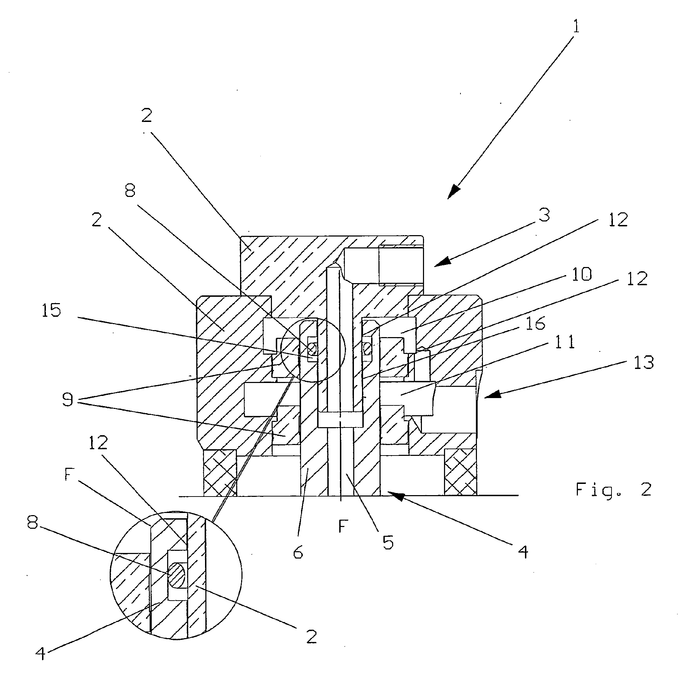

More particularly, the device 1, shown in detail in Figure 2, comprises a first fixed part 2 provided with a delivery duct 3 for the fluid F and a second part 4 provided with an outlet duct 5 suited to be placed in communication with the duct present in the drilled shaft.

The second part is suited to be anchored to the rear end of said shaft. More particularly, the second part 4 is rotatingly mounted on the first part 2 and comprises a hollow shaft 6 housed in a seat made in the first part 2.

The device also comprises at least one sealing element 8, arranged between the above mentioned parts 2 and 4.

According to the proposed solution, said at least one sealing element 8 is in contact with both parts 2, 4 to achieve water tightness only when the fluid F is conveyed via the delivery duct 3.

More particularly, according to a preferred but non-limiting embodiment of the invention, the sealing element should be positioned on the rotary part, which is machined in such a way as to prevent contact between the sealing element and the fixed part when no pressurized fluid is introduced via the delivery duct, thus eliminating the problem of friction and at the same time permitting its elastic deformation in case of presence of pressurized fluid inside the channel.

More generally, said at least one sealing element 8 is integral with one of said parts 2, 4 and suited to take on at least one first operating position in which, when the fluid F is not conveyed via the delivery duct 3, it is in contact only with one of the parts 2, 4, and at least one second operating position in which, when the fluid F is conveyed via the delivery duct 3, said at least one sealing element 8 comes in contact with both parts 2, 4 to ensure water tightness.

It is clear that in other embodiments of the invention the at least one sealing element 8 can be integral with said first part 2.

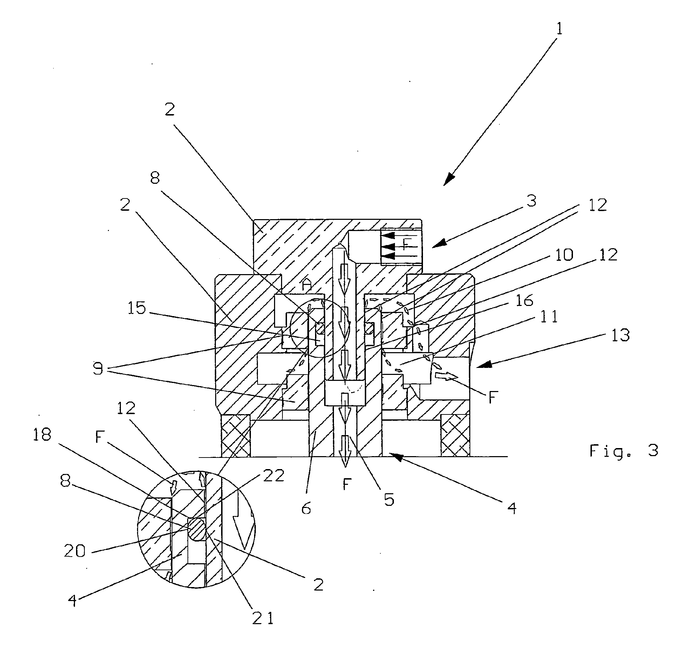

In the non-limiting example of embodiment represented herein, the device 1 comprises at least one sealing element 8 integral with said moving part 4 and suited to take on a first operating position in which, when the fluid F is not conveyed via the delivery duct, it is not in contact with said first part 2, as shown also in the enlarged detail of Figure 2, and a second operating position, visible also in the enlarged detail shown in Figure 3, in which, when the fluid F is conveyed via the delivery duct 3, said at least one sealing element 8, under the pressure of the conveyed fluid F, becomes deformed to come in contact with said first part 2 and achieve water tightness.

The moving part 4 is preferably maintained coaxial with the first part 2 through bearings of the type operating with pressurized air, indicated by 9 in Figures 2 and 3 and housed in the above mentioned seat.

The device also comprises at least one chamber for collecting the fluid that may not be retained by the sealing element.

More precisely, the non-limiting preferred embodiment of the invention represented in Figures 2 and 3 comprises a first collection chamber 10 and a second collection chamber 11 for the fluid F that communicate with each other through a communication duct 12.

The second chamber 11 is also provided with at least one discharge duct 13 for the the fluid F collected therein, also called draining duct, which makes the fluid available to convey it, if necessary, to a hydraulic circuit for filtering and recovering the fluid, not represented herein.

According to a further preferred embodiment of the invention, the second part 4 is also slidingly fitted in the seat created in the first part 2, in such a way as to be able to slide axially.

In the non-limiting preferred embodiment of the invention represented in Figures 2 and 3, the device 1 comprises only one sealing element consisting of an annular gasket of the type known as O ring, preferably made of an elastic material such as rubber, Teflon, NBR, Viton or similar or equivalent materials. Said element 8 is placed in a housing 15 created in the second part 4 of the device 1 that, in the example of embodiment illustrated herein, comprises an annular housing communicating on one side with the delivery duct 3 of the fluid F via a duct 16 and on the other side with the first collection chamber 10.

In operation, when the device 1 is configured for dry operation and therefore the fluid F is not conveyed, under pressure, inside the delivery duct 3, the sealing element 8 is arranged as shown in Figure 2.

Thus it is integral with the rotary part 4 and does not have portions in contact with the first part 2. When the operator activates the machine tool, the moving part 4 is set rotating by the powered shaft of the tool not, represented herein, as well as the sealing element 8 that is not in contact with the first part 2.

This prevents the wearing out and overheating of the element 8, together with the consequent loss of tightness and energy. It is also important to observe that the centrifugal force that acts on the sealing element 8, when this is set rotating with the part 4, contributes to keeping the element 8 itself compressed towards the part 4.

Vice versa, when the operator prepares the machine for operation with a coolant/lubricant F, the pressurized fluid F is introduced via the delivery duct 3.

Said pressurized fluid thus acts on the sealing element 8, pressing it against the rear wall 18 of the seat where it is housed and deforming it to the extent of placing it in contact with the first part 2 of the device 1 and achieving the desired water tightness.

Thus, in the presence of pressurized fluid the sealing element 8 varies its shape and position, creating contact in three distinct annular areas, indicated respectively by 20, 21 and 22 in the detail of Figure 3, thus guaranteeing the functionality of the joint and the delivery of the fluid F to the rotary shaft and to the tool. More precisely, in the non-limiting preferred embodiment of the invention represented herein, two annular sealing areas are radial sealing areas 20, 21, and the sealing area 22 is an axial sealing area with respect to the rotation axis.

It must also be noticed that the fluid F that may not be retained by the sealing element 8 is collected in the collection chambers 10 and 11 via the recovery ducts 12 and successively discharged via the draining duct 13 and recirculated after a filtering cycle, if necessary.

The above description clearly shows that the solution proposed allows the drawbacks described to be eliminated.

Advantageously, the devices carried out according to the present invention are **characterized in that** they can operate in dry conditions without affecting the water tightness of the joint and without developing frictions that lead to undesired energy losses. This makes the devices of the invention particularly reliable, versatile and performing, and capable of being used also in particularly demanding conditions.

In particular, the proposed solution advantageously makes it possible to eliminate friction in case of rotation in dry conditions, also thanks to the centrifugal force applied to the seal.

Still advantageously, the proposed solution makes it possible to obtain a spindle, an electric spindle and a device that create effective contact between the surfaces of the sealing element and the two moving and fixed part only in the presence of pressurized fluid.

This advantageously makes it possible to obtain a spindle, an electric spindle and a device that wear out to a lesser degree compared to the known equipment.

This advantageously makes it possible to obtain a spindle, an electric spindle and a device that need less maintenance compared to the known equipment.

Still advantageously, the proposed solution makes it possible to obtain a spindle, an electric spindle and a device that are more reliable than the known devices, having comparable characteristics and offering better performance in terms, for example, of rpm, when configured for dry operation.

Still to advantage, the proposed solution makes it possible to gradually increase the degree of tightness as a direct function of the pressure exerted by the passage of fluid in the duct of the manifold, as well as to eliminate contact between the sealing element and the fixed part of the device in case of dry operation.

Even though the invention has been described making reference to the attached drawings, upon implementation changes can be made that shall all be considered protected by the present patent, provided that they are within the scope of the following claims.

It is also important to remember that when the details mentioned in the claims below are followed by references, these must be understood as meant to improve the comprehensibility of the claim in question and not as a limit to the interpretation of the same.

## Claims

1. Device (1) suitable for conveying a fluid to a tool mounted on a rotary shaft (101, 103), said device comprising:
- a first part (2) provided with a delivery duct (3) for a fluid (F) and a second part (4) provided with an outlet duct (5) suited to be placed in communication with a duct present in said rotary shaft (103), said second part (4) being rotatingly mounted on said first part (2);
- at least one sealing element (8) arranged between said parts (2,4); wherein:
- at least a portion of said delivery duct (3) is received inside said second part (4) so that said outlet duct (5) is in fluid communication with said delivery duct (3);
- a further duct (16) is formed between said portion of said duct (3) and said second part (4);
- and wherein said at least one sealing element (8) is arranged in a housing (15) formed in said second part (4), with said housing (15) being in fluid communication with said duct (3) through said further duct (16) and comprising a wall facing said first part (2) and a rear wall (18) located behind said sealing element (8) in the fluid direction of said fluid (F) along said further duct (16);
**characterized in that** said at least one sealing element (8) is integral with one of said parts (2, 4); **in that**, when said fluid (F) is not conveyed via said delivery duct (3), it is in contact only with one of said parts (2, 4); and **in that**, when said fluid (F) is conveyed under pressure via said delivery duct (3), and flows in part through said further duct (16) said at least one sealing element (8) is pressed against said rear wall (18) of said housing (15) and deformed to the extent of coming in contact with both said parts (2, 4) to achieve fluid tightness between said first part (2) and said second part (4).

2. Device according to claim 1, **characterized in that** said at least one sealing element (8) is integral with said second part (4).

3. Device according to claim 1, **characterized in that** said at least one sealing element (8) is integral with said first part (2).

4. Device according to any of the preceding claims, **characterized in that** said first part (2) comprises a hollow shaft (6) housed in a seat created in said first part (2).

5. Device according to any of the preceding claims, **characterized in that** said second part (4) is preferably maintained coaxial with said first part (2) by means of at least one bearing (9) of the type operating with pressurized air.

6. Device according to any of the preceding claims, **characterized in that** it also comprises at least one collection chamber (10, 11) for the fluid (F), communicating with the outside via at least one draining duct (13) and communicating with said housing (15).

7. Device according to any of the claims from 1 to 5, **characterized in that** it comprises at least two collection chambers (10, 11) for the fluid (F), said chambers being in communicating with each other via at least one communication duct (12), and wherein at least one of said chambers communicates with the outside via at least one draining duct (13).

8. Device according to any of the preceding claims, **characterized in that** said second part (4) is also slidingly fitted in a seat created in said first part (2) in such a way as to be able to slide axially.

9. Device according to any of the preceding claims, **characterized in that** said at least one sealing element (8) comprises an annular gasket.

10. Device according to claim 9, **characterized in that** said annular gasket is of the type known as O ring.

11. Device according to claim 9 or 10, **characterized in that** said annular gasket is preferably made of an elastic material, like for example rubber, Teflon, NBR, Viton.

12. Device according to any of preceding claims 9 to 11, **characterized in that**, in the presence of said fluid (F) under pressure, said at least one annular gasket comes in contact with said parts (2, 4) in at least three annular areas (20, 21, 22) located on said wall of said housing (15) facign said part (2), on said rear wall (18) of said housing (15) and on said part (2), respectively.

13. Tool carrier comprising a device suited to convey a fluid to a tool mounted on said tool carrier, **characterized in that** said device is carried out according to any of the claims from 1 to 12.

14. Spindle (100) comprising a device suited to convey a fluid to a tool mounted on said spindle, **characterized in that** said device is carried out according to any of the claims from 1 to 12.

15. Electric spindle (100) comprising a device suited to convey a fluid to a tool mounted on said electric spindle, **characterized in that** said device is carried out according to any of the claims from 1 to 12.

## Patentansprüche

1. Vorrichtung (1) für die Leitung einer Flüssigkeit zu einem an einer drehenden Welle (101, 103) montierten Werkzeug, wobei besagte Vorrichtung Folgendes umfasst:
- einen ersten Teil mit einer Zuleitung (3) für eine Flüssigkeit (F) und einen zweiten Teil (4) mit einer Auslassleitung (5), die dazu geeignet ist, mit einer Leitung in der besagten, drehenden Welle (103) in Kommunikation gesetzt zu werden, wobei der besagte zweite Teil (4) drehend an besagtem ersten Teil (2) montiert ist;
- wenigstens ein zwischen den besagten Teilen (2, 4) angeordnetes Dichtelement (8);
wobei:
- wenigstens ein Abschnitt der besagten Zuleitung (3) innerhalb des besagten zweiten Teils (4) aufgenommen wird, so dass sich die besagte Auslassleitung (5) in fließender Kommunikation mit der besagten Zuleitung (3) befindet;
- eine weitere Leitung (16) zwischen dem besagten Abschnitt der besagten Leitung (3) und dem besagten Teil (4) gebildet ist;
- und wobei das besagte wenigstens eine Dichtelement (8) in einem in dem besagten zweiten Teil (4) gebildeten Gehäuse (15) angeordnet ist, wobei sich dieses Gehäuse (15) in fließender Kommunikation mit der besagten Leitung (3) befindet durch die besagte, weitere Leitung (16), und eine Wand umfasst, die zu dem besagten ersten Teil (2) gerichtet ist, sowie eine Rückwand (18) hinter dem besagten Dichtelement (8) in Fließrichtung der besagten Flüssigkeit (F) entlang der besagten weiteren Leitung (16),
**dadurch gekennzeichnet, dass** das besagte, wenigstens eine Dichtelement (8) eine Einheit bildet mit einem der besagten Teile (2, 4); **dadurch**, dass, wenn die besagte Flüssigkeit (F) nicht durch die besagte Zuleitung (3) geleitet wird, sie nur mit einem der besagten Teile (2, 4) in Kontakt ist; und **dadurch**, dass, wenn die besagte Flüssigkeit (F) unter Druck durch die besagte Zuleitung (3) geleitet wird, und teilweise durch die besagte, weitere Leitung (16) fließt, das besagte, wenigstens eine Dichtelement (8) gegen die besagte Rückwand (18) des besagten Gehäuses (15) gedrückt und zu einer derartigen Größe verformt wird, dass es mit beiden Teilen (2, 4) in Berührung kommt, um eine Flüssigkeitsundurchlässigkeit zwischen dem besagten ersten Teil (2) und dem besagten zweiten Teil (4) zu erreichen.

2. Vorrichtung gemäß Patentanspruch 1), **dadurch gekennzeichnet, dass** das besagte, wenigstens eine Dichtelement (8) mit dem besagten zweiten Teil (4) eine Einheit bildet.

3. Vorrichtung gemäß Patentanspruch 1), **dadurch gekennzeichnet, dass** das besagte, wenigstens eine Dichtelement (8) mit dem besagten ersten Teil (2) eine Einheit bildet.

4. Vorrichtung gemäß eines jeden der vorstehenden Patentansprüche, **dadurch gekennzeichnet, dass** der besagte erste Teil (2) eine Hohlwelle (6) umfasst, die in einer im besagten ersten Teil (2) erzeugten Aufnahme positioniert ist.

5. Vorrichtung gemäß eines jeden der vorstehenden Patentansprüche, **dadurch gekennzeichnet, dass** der besagte zweite Teil (4) durch wenigstens ein Lager (9) vom mit unter Überdruck stehender Luft arbeitenden Typ vorzugsweise koaxial zu dem besagten ersten Teil (2) gehalten wird.

6. Vorrichtung gemäß eines jeden der vorstehenden Patentansprüche, **dadurch gekennzeichnet, dass** sie auch wenigstens eine Auffangkammer (10, 11) für die Flüssigkeit (F) umfasst, die über wenigstens eine Ablaufleitung (13) mit der Außenumgebung sowie mit dem besagten Gehäuse (15) kommuniziert.

7. Vorrichtung gemäß eines jeden der Patentansprüche von 1 bis 5, **dadurch gekennzeichnet, dass** sie wenigstens zwei Auffangkammern (10, 11) für die Flüssigkeit (F) umfasst, die über wenigstens eine Verbindungsleitung (12) miteinander kommunizieren, und wobei wenigstens eine der besagten Kammern über wenigstens eine Ablaufleitung (13) mit der Außenumgebung kommuniziert.

8. Vorrichtung gemäß eines jeden der vorstehenden Patentansprüche, **dadurch gekennzeichnet, dass** der besagte zweite Teil (4) auch gleitend in eine Aufnahme im besagten ersten Teil (2) eingepasst ist, so dass er in axialer Richtung gleiten kann.

9. Vorrichtung gemäß eines jeden der vorstehenden Patentansprüche, **dadurch gekennzeichnet, dass** das wenigstens eine Dichtelement (8) eine ringförmige Dichtung umfasst.

10. Vorrichtung gemäß Patentanspruch 9, **dadurch gekennzeichnet, dass** die besagte ringförmige Dichtung von dem als O-Ring bezeichneten Typ ist.

11. Vorrichtung gemäß Patentanspruch 9 oder 10, **dadurch gekennzeichnet, dass** die besagte ringförmige Dichtung vorzugsweise aus elastischem Material besteht, wie beispielsweise Gummi, Teflon, NBR, Viton.

12. Vorrichtung gemäß eines jeden der Patentansprüche von 9 bis 11, **dadurch gekennzeichnet, dass** bei Vorhandensein der besagte, unter Druck stehenden Flüssigkeit (F) besagte wenigstens eine ringförmige Dichtung mit den besagten Teilen (2, 4) in Kontakt kommt in wenigstens drei ringförmigen Bereichen (20, 21, 22), und zwar jeweils an der Wand des besagten Gehäuses (15) gegenüber von Teil (2), an der besagten Rückwand (18) des besagten Gehäuses (15) und an dem besagten Teil (2).

13. Werkzeugträger, eine Vorrichtung zur Leitung einer Flüssigkeit zu einem an besagtem Werkzeugträger montierten Werkzeug umfassend, **dadurch gekennzeichnet, dass** die besagte Vorrichtung gemäß eines jeden der Patentansprüche von 1 bis 12 ausgeführt ist.

14. Spindel (100), eine Vorrichtung zur Leitung einer Flüssigkeit zu einem an besagter Spindel montierten Werkzeug umfassend, **dadurch gekennzeichnet, dass** die besagte Vorrichtung gemäß eines jeden der Patentansprüche von 1 bis 12 ausgeführt ist.

15. Elektrospindel (100), eine Vorrichtung zur Leitung einer Flüssigkeit zu einem an besagter Elektrospindel montierten Werkzeug umfassend, **dadurch gekennzeichnet, dass** die besagte Vorrichtung gemäß eines jeden der Patentansprüche von 1 bis 12 ausgeführt ist.

## Revendications

1. Dispositif (1) indiqué pour transporter un fluide à un outil monté sur un arbre rotatif (101, 103), ledit dispositif comprenant:
- une première partie (2) dotée d'un conduit de refoulement (3) pour un fluide (F) et une deuxième partie (4) dotée d'un conduit de sortie (5) indiqué pour être mis en communication avec un conduit présent dans ledit arbre rotatif (103), ladite deuxième partie (4) étant montée de manière pivotante sur ladite première partie (2);
- au moins un élément d'étanchéité (8) positionné entre lesdites parties (2, 4); où:
- au moins une partie dudit conduit de refoulement (3) est reçue à l'intérieur de ladite deuxième partie(4) de façon à ce que ledit conduit de sortie (5) se trouve en communication fluide avec ledit conduit de refoulement (3);
- un conduit supplémentaire (16) est formé entre ladite partie dudit conduit (3) et ladite deuxième partie (4);
- et où ledit au moins un élément d'étanchéité (8) est positionné dans un logement (15) formé dans ladite deuxième partie (4), avec ledit logement (15) se trouvant en communication fluide avec ledit conduit (3) à travers ledit conduit supplémentaire (16) et comprenant une paroi étant en face de ladite première partie (2) et une paroi arrière (18) positionnée derrière ledit élément d'étanchéité (8) dans la direction fluide dudit fluide (F) le long dudit conduit supplémentaire (16);
**caractérisé en ce que** ledit au moins un élément d'étanchéité (8) est solidaire d'une desdites parties (2, 4) ; **en ce que**, quand ledit fluide (F) n'est pas transporté à travers ledit conduit de refoulement (3), il est en contact seulement avec une desdites parties (2, 4) ; et **en ce que**, quand ledit fluide (F) est transporté sous pression à travers ledit conduit de refoulement (3) et s'écoule en partie à travers ledit conduit supplémentaire (16), ledit au moins un élément d'étanchéité (8) est appuyé contre ladite paroi arrière (18) dudit logement (15) et déformé à tel point qu'il peut entrer en contact avec lesdites deux parties (2, 4) pour atteindre l'étanchéité fluide entre ladite première partie (2) et ladite deuxième partie (4).

2. Dispositif selon la revendication 1, **caractérisé en ce que** ledit au moins un élément d'étanchéité (8) est solidaire de ladite deuxième partie (4).

3. Dispositif selon la revendication 1, **caractérisé en ce que** ledit au moins un élément d'étanchéité (8) est solidaire de ladite première partie (2).

4. Dispositif selon l'une quelconque des revendications précédentes, **caractérisé en ce que** ladite première partie (2) comprend un arbre creux (6) logé dans un siège créé dans ladite première partie (2).

5. Dispositif selon l'une quelconque des revendications précédentes, **caractérisé en ce que** ladite deuxième partie (4) est préférablement maintenue coaxiale avec ladite première partie (2) au moyen d'au moins un palier (9) du type fonctionnant avec de l'air préssurisé.

6. Dispositif selon l'une quelconque des revendications précédentes, **caractérisé en ce qu'**il comprend également au moins une chambre de récolte (10, 11) pour le fluide (F), communiquant avec l'extérieur à travers au moins un tuyau de drainage (13) et communiquant avec ledit logement (15).

7. Dispositif selon l'une quelconque des revendications de 1 à 5, **caractérisé en ce qu'**il comprend au moins deux chambres de récolte (10, 11) pour le fluide (F), lesdites chambres étant en communication l'une avec l'autre à travers au moins un conduit de communication (12), et où au moins une desdites chambres communique avec l'extérieur à travers au moins un tuyau de drainage (13).

8. Dispositif selon l'une quelconque des revendications précédentes, **caractérisé en ce que** ladite deuxième partie (4) est en outre logée de manière coulissante dans un siège créé dans ladite première partie (2) de sorte qu'elle est en mesure de coulisser axialement.

9. Dispositif selon l'une quelconque des revendications précédentes, **caractérisé en ce que** ledit au moins un élément d'étanchéité (8) comprend un joint annulaire.

10. Dispositif selon la revendication 9, **caractérisé en ce que** ledit joint annulaire est du type connu comme joint torique.

11. Dispositif selon la revendication 9 ou 10, **caractérisé en ce que** ledit joint annulaire est préférablement réalisé en matériel élastique, comme par exemple caoutchouc, Téflon, NRB, Viton.

12. Dispositif selon l'une quelconque des revendications précédentes de 9 à 11, **caractérisé en ce que**, à la présence dudit fluide (F) sous pression, ledit au moins un joint annulaire entre en contact avec lesdites parties (2, 4) dans au moins trois zones annulaires (20, 21, 22) se trouvant respectivement sur ladite paroi dudit logement (15) en face de ladite partie (2), sur ladite paroi arrière (18) dudit logement (15) et sur ladite partie (2).

13. Porte-outil comprenant un dispositif indiqué pour transporter un fluide à un outil monté sur ledit porte-outil, **caractérisé en ce que** ledit dispositif est réalisé selon l'une quelconque des revendications de 1 à 12.

14. Mandrin (100) comprenant un dispositif indiqué pour transporter un fluide à un outil monté sur ledit mandrin, **caractérisé en ce que** ledit dispositif est réalisé selon l'une quelconque des revendications de 1 à 12.

15. Mandrin électrique (100) comprenant un dispositif indiqué pour transporter un fluide à un outil monté sur un mandrin électrique, **caractérisé en ce que** ledit dispositif est réaslié selon l'une quelconque des revendications de 1 à 12.
